(19) Europäisches Patentamt
European Patent Office
Office européen des brevets

(11) **EP 4 454 805 A2**

(12) **EUROPEAN PATENT APPLICATION**

(43) Date of publication:
**30.10.2024 Bulletin 2024/44**

(21) Application number: **24171087.0**

(22) Date of filing: **18.04.2024**

(51) International Patent Classification (IPC):
**B23K 35/02** (2006.01)    **B23K 35/26** (2006.01)
**B23K 35/36** (2006.01)    **B23K 35/362** (2006.01)
**C22C 13/00** (2006.01)

(52) Cooperative Patent Classification (CPC):
**B23K 35/025; B23K 35/262; B23K 35/3612;
B23K 35/3615; B23K 35/3618; B23K 35/362**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.04.2023 JP 2023071059**

(71) Applicant: Senju Metal Industry Co., Ltd.
**Tokyo 120-8555 (JP)**

(72) Inventors:
• **KAWAMATA, Hiroaki**
**TOKYO, 120-8555 (JP)**
• **FUJINO, Yuki**
**TOKYO, 120-8555 (JP)**
• **KITAZAWA, Kazuya**
**TOKYO, 120-8555 (JP)**
• **SHINOZAKI, Keisuke**
**TOKYO, 120-8555 (JP)**

(74) Representative: **Lavoix**
**Bayerstraße 83**
**80335 München (DE)**

(54) **FLUX, SOLDER PASTE, AND METHOD OF PRODUCING JOINED BODY**

(57) A flux contains: a triol solvent (S 1); a monoamide-based thixotropic agent; and at least one solvent (S2) selected from the group consisting of a monohydric solvent and a dihydric solvent, wherein the content of the monoamide-based thixotropic agent is 0.5% by mass or more and less than 15% by mass with respect to the total mass of the flux, and the content of the solvent (S2) is 50% by mass or more with respect to the total mass of the flux.

## FIG. 1

EP 4 454 805 A2

**Description**

BACKGROUND OF THE INVENTION

Field of the Invention

The present invention relates to a flux, a solder paste, and a method of producing a joined body.

Description of Related Art

When manufacturing an electronic component, fixing of components to a substrate and electrical connection of components to the substrate are carried out by soldering. In soldering, a flux, a solder powder, or a solder paste obtained by mixing the flux and the solder powder is used.

The flux has the effect of chemically removing metal oxides present on the metal surface of an object to be joined and on the solder, thereby enabling the movement of metal elements at the boundary between the metal surface of the object to be joined and the solder. Therefore, by carrying out soldering using the flux, an intermetallic compound is formed between the metal surface of the object to be joined and the solder, and strong joining can be obtained.

In soldering using a solder paste, the solder paste is first printed on a substrate, components are mounted thereon, and the substrate on which the components are mounted is heated in a reflow furnace. As a result, the solder powder contained in the solder paste is melted, and the components are soldered on the substrate. The flux used for reflow soldering generally contains a resin component, a solvent, an activator, a thixotropic agent, and the like.

In a packaging of a semiconductor which controls a large current, a solder material has been used in a die bonding portion or a heat sink bonding portion.

In such a packaging application, bonding which suppresses the generation of voids is required. As a cause of voids generated during the reflow soldering, it is conceivable that a gasified flux component is incorporated into the molten solder.

As a method for satisfying such a demand, there is a method of carrying out reflow in a reducing gas atmosphere such as formic acid. According to the reflow in the reducing gas atmosphere, a fluxless method can be realized by using the reducing gas itself as the flux, and thus the cause of voids can be removed. In addition, in the reflow carried out in the reducing gas atmosphere, since the reducing gas itself does not remain as a residue, a cleaning-free bonding step can be realized.

In the fluxless method, it is assumed that a solder preform is used as the solder material. However, on the other hand, from the viewpoint of ease of handling by a user and viewpoint of automation, there is a demand for using a solder paste even in the reflow carried out in the reducing gas atmosphere.

For example, Patent Document 1 proposes a method of producing a soldered product, in which reflow soldering is carried out in a reducing atmosphere including a reducing gas, and a solder paste used therefor.

[Citation List]

[Patent Document]

[Patent Document 1] Japanese Patent No. 6706000

SUMMARY OF THE INVENTION

[Problems to be Solved by Invention]

In the packaging of a power semiconductor, bonding that suppresses the generation of voids is required from the viewpoint of heat dissipation.

The present invention has been made in consideration of the above-described circumstances, and provides a flux which further suppresses the generation of voids during soldering, a solder paste, and a method of producing a joined body.

[Means for Solving Problems]

In order to solve the above-described problem, the present invention employs the following configurations.

[1] A flux containing:

a triol solvent (S 1);
a monoamide-based thixotropic agent; and
at least one solvent (S2) selected from the group consisting of a monohydric solvent and a dihydric solvent,
in which the content of the monoamide-based thixotropic agent is 0.5% by mass or more and less than 15% by mass with respect to the total mass of the flux, and
the content of the solvent (S2) is 50% by mass or more with respect to the total mass of the flux.

[2] The flux according to [1],
in which the content of the triol solvent (S1) is 1% by mass or more and 15% by mass or less with respect to the total mass of the flux.
[3] The flux according to [1] or [2],
in which the triol solvent (S1) is a triol compound in which three hydroxy groups are bonded to a chained hydrocarbon group having three to six carbon atoms.
[4] The flux according to [3],
in which the triol solvent (S1) is at least one selected from the group consisting of 3-methylbutane-1,2,3-triol, 2-methylbutane-1,2,4-triol, 1,2,6-hexanetriol, glycerin, and 1,2,4-butanetriol.
[5] The flux according to [4],
in which the triol solvent (S1) is a combination of a first triol solvent selected from the group consisting of 3-methylbutane-1,2,3-triol and 2-methylbutane-1,2,4-triol and a second triol solvent selected from the group consisting of 1,2,6-hexanetriol, glycerin, and 1,2,4-butanetriol.
[6] The flux according to [5],
in which the mixing ratio of the first triol solvent and the second triol solvent is 1 to 10 as a mass ratio represented by the first triol solvent/the second triol solvent.
[7] The flux according to any one of [1] to [6],
in which the solvent (S2) includes a monohydric solvent.
[8] The flux according to [7],
in which the monohydric solvent is a branched aliphatic monohydric alcohol having 16 to 20 carbon atoms.
[9] The flux according to any one of [1] to [8],
in which the mixing ratio of the solvent (S2) and the triol solvent (S1) is 7 to 31 as a mass ratio represented by the solvent (S2)/the triol solvent (S1).
[10] The flux according to any one of [1] to [9],
in which the monoamide-based thixotropic agent is a combination of an aromatic amide and a fatty acid amide.
[11] The flux according to any one of [1] to [10], further containing:

an activator,
in which the content of the activator is more than 0% by mass and 5% by mass or less with respect to the total mass of the flux.

[12] The flux according to any one of [1] to [11],
in which the flux contains no rosin-based resin.
[13] The flux according to any one of [1] to [10], and [12],
in which the flux contains no activator.
[14] A solder paste containing:

a solder alloy powder; and
the flux of any one of [1] to [13].

[15] A method of producing a joined body, the method including:

a step of obtaining a joined body by soldering a component and a substrate,
in which, during soldering, reflow is carried out in a reducing gas atmosphere using the solder paste according to [14].

[Effect of Invention]

According to the present invention, it is possible to provide a flux which further suppresses the generation of voids during soldering, a solder paste using the flux, and a method of producing a joined body, using the solder paste.

BRIEF DESCRIPTION OF THE DRAWINGS

FIG. 1 is a diagram showing a reflow profile in the evaluation of void suppression ability.
FIG. 2 is a diagram schematically showing pattern holes of I in the evaluation of hot slump suppression capability.

DETAILED DESCRIPTION OF THE INVENTION

(Flux)

An embodiment of the flux according to a first aspect contains a triol solvent (S 1), a monoamide-based thixotropic agent, and at least one solvent (S2) selected from the group consisting of a monohydric solvent and a dihydric solvent. In the flux according to the present embodiment, the content of the monoamide-based thixotropic agent is 0.5% by mass or more and less than 15% by mass with respect to the total mass of the flux, and the content of the solvent (S2) is 50% by mass or more with respect to the total mass of the flux.
The flux according to the present embodiment can be used to conduct reflow soldering, and is capable of further suppressing the generation of voids compared with fluxes in the related art.

<Triol solvent (S 1)>

In the flux according to the present embodiment, the generation of voids during soldering can be further suppressed by including a triol solvent.
The term "triol solvent" refers to a solvent having three hydroxy groups.
Examples of the triol solvent include a triol compound having three hydroxy groups and a boiling point of 170°C to 330°C. Additional examples of a triol solvent include a triol compound in which three hydroxy groups are bonded to a chained hydrocarbon group, and preferable examples thereof include a triol compound in which three hydroxy groups are bonded to a chained hydrocarbon group having three to six carbon atoms.
The chained hydrocarbon group may be linear or branched, but is preferably branched.
Specific examples of the triol solvent include 3-methylbutane-1,2,3-triol, 2-methylbutane-1,2,4-triol, 1,2,6-hexanetriol, glycerin, 1,2,4-butanetriol, and 1,2,3-butanetriol.
One of the triol solvents may be used alone, or two or more thereof may be mixed and used.
The triol solvent is preferably a triol compound in which three hydroxy groups are bonded to a chained hydrocarbon group having three to six carbon atoms; more preferably at least one selected from the group consisting of 3-methylbutane-1,2,3-triol, 2-methylbutane-1,2,4-triol, 1,2,6-hexanetriol, glycerin, and 1,2,4-butanetriol; and still more preferably at least one selected from the group consisting of 3-methylbutane-1,2,3-triol and 2-methylbutane-1,2,4-triol, from the viewpoint of improving void suppression ability.
Alternatively, among them, the triol solvent is even more preferably at least one selected from the group consisting of 1,2,6-hexanetriol, glycerin, and 1,2,4-butanetriol, from the viewpoint of enhancing thixotropy of a solder paste and improving hot slump suppression capability when made into a solder paste.
In addition, from the viewpoint of void suppression, enhancing thixotropy of a solder paste and improving hot slump suppression capability when made into a solder paste a solder paste, the triol solvent is preferably a combination of a first triol solvent selected from the group consisting of 3-methylbutane-1,2,3-triol and 2-methylbutane-1,2,4-triol and a second triol solvent selected from the group consisting of 1,2,6-hexanetriol, glycerin, and 1,2,4-butanetriol; more preferably a combination of 3-methylbutane-1,2,3-triol and a second triol solvent selected from the group consisting of 1,2,6-hexanetriol, glycerin, and 1,2,4-butanetriol; still more preferably a combination of 3-methylbutane-1,2,3-triol and a second triol solvent selected from the group consisting of glycerin and 1,2,4-butanetriol; and particularly preferably a combination of 3-methylbutane-1,2,3-triol and glycerin.
The content of the triol solvent in the flux according to the present embodiment is preferably 1% by mass or more and 15% by mass or less, more preferably 1.5% by mass or more and 12% by mass or less, and still more preferably 2% by mass or more and 11% by mass or less with respect to the total amount (100% by mass) of the flux.
In the case where the content of the triol solvent is equal to or more than the lower limit value of the above-described preferred range, the generation of voids during soldering can be suppressed. On the other hand, in the case where the content of the triol solvent is equal to or less than the upper limit value of the above-described preferred range, the thixotropy of a solder paste can be enhanced, and the hot slump suppression capability when made into a solder paste can be improved.
In the case where the first triol solvent and the second triol solvent are used in combination as the triol solvent, the mixing ratio of both is preferably 1 to 10, more preferably 2 to 10, and still more preferably 3 to 10, as a mass ratio represented by first triol solvent/second triol solvent.

In the case where the mixing ratio of both is equal to or more than the lower limit value of the above-described preferred range, the generation of voids during soldering can be suppressed. On the other hand, in the case where the mixing ratio of both is equal to or less than the upper limit value of the above-described preferred range, the void suppression ability, the thixotropy of a solder paste, and the hot slump suppression capability when made into a solder paste can be improved.

<Monoamide-based thixotropic agent>

In the flux according to the present embodiment, by including the monoamide-based thixotropic agent, the solder paste is imparted with thixotropy, and printability of the solder paste is improved.

As the monoamide-based thixotropic agent, saturated fatty acid amides and unsaturated fatty acid amides (these are collectively referred to as "fatty acid amides" simply); and aromatic amides are exemplary examples, and for example, acetamide, propionamide, butyramide, isobutyramide, hexanamide, octanamide, 2-ethylhexanoamide, lauramide, palmitamide, stearamide, oleamide, behenamide, erucamide, hydroxystearamide, hexamethylene hydroxystearamide, methylol stearamide, methylolamide, fatty acid ester amide, benzamide, 2-phenylacetamide, and p-toluamide are exemplary examples.

One of the monoamide-based thixotropic agents may be used alone, or two or more thereof may be mixed and used.

Among them, the monoamide-based thixotropic agent is preferably at least one selected from the group consisting of a fatty acid amide and an aromatic amide, and more preferably at least one selected from the group consisting of a saturated fatty acid amide and an aromatic amide. For example, as the monoamide-based thixotropic agent, a combination of a fatty acid amide and an aromatic amide may be used, or a combination of a saturated fatty acid amide and an aromatic amide may be used, and a combination of stearamide and p-toluamide is an exemplary example.

The content of the monoamide-based thixotropic agent in the flux according to the present embodiment is preferably 0.5% by mass or more and less than 15% by mass, more preferably 1% by mass or more and 10% by mass or less, and still more preferably 2% by mass or more and 8% by mass or less with respect to the total amount (100% by mass) of the flux.

In the case where the content of the monoamide-based thixotropic agent is less than the upper limit value of the above-described range, the generation of voids during soldering can be suppressed. On the other hand, in the case where the content of the monoamide-based thixotropic agent is equal to or more than the lower limit value of the above-described range, the thixotropy of a solder paste can be enhanced, and the hot slump suppression capability when made into a solder paste a solder paste can also be improved.

In the case where a fatty acid amide and an aromatic amide are used in combination as the monoamide-based thixotropic agent, the mixing ratio of both is preferably 5/5 or more and 9/1 or less, more preferably more than 5/5 and 8/2 or less, and still more preferably more than 5/5 and 7/3 or less, as a mass ratio represented by aromatic amide/fatty acid amide.

<Solvent (S2)>

The flux according to the present embodiment contains 50% by mass or more of at least one solvent (S2) selected from the group consisting of a monohydric solvent and a dihydric solvent with respect to the total mass of the flux. As a result, the generation of voids during soldering can be suppressed, and a low-residue flux can be prepared.

The flux according to the present embodiment preferably contains a solvent (S2) including a monohydric solvent, and more preferably contains a monohydric solvent as a base solvent of the flux.

The monohydric solvent has a high interaction with the triol solvent (S 1), and in the case where the monohydric solvent is contained, the combined effect of the first triol solvent and the second triol solvent is particularly enhanced. Therefore, the void suppression ability is improved, and the thixotropy of a solder paste and the hot slump suppression capability are improved.

The term "monohydric solvent" refers to a solvent having one hydroxy group. The term "dihydric solvent" refers to a solvent having two hydroxy groups.

«Monohydric solvent»

As the monohydric solvent, for example, alcohol-based solvents, glycol ether-based solvents, and terpineols are exemplary examples.

As the alcohol-based solvent, a branched aliphatic monohydric alcohol is preferable, a branched aliphatic monohydric alcohol having 16 to 20 carbon atoms is an exemplary example, and isohexadecanol, isoheptadecanol, isooctadecanol, isononadecanol, and isoeicosanol are exemplary examples.

As the isohexadecanol, 2-hexyl-1-decanol, 2-pentyl-1-undecanol, and the like are exemplary examples.

As the isoheptadecanol, 2-hexyl-1-undecanol, 2-heptyl-1-decanol, and the like are exemplary examples.

As the isooctadecanol, 5,7,7-trimethyl-2-(1,3,3-trimethylbutyl)-1-octanol, 2-nonyl-1-nonanol, 8-methyl-2-(4-methylhexyl)-1-decanol, 2-octyl-1-decanol, 2-heptyl-1-undecanol, 2-hexyl-1-dodecanol, and the like are exemplary examples.

As the isononadecanol, 2-hexyl-1-tridecanol and the like are exemplary examples.

As the isoeicosanol, 5,9-dimethyl-2-(1,5-dimethylhexyl)-1-decanol and the like are exemplary examples.

As the glycol ether-based solvent, ethylene glycol monophenyl ether, diethylene glycol monobutyl ether, diethylene glycol monohexyl ether (hexyl diglycol), diethylene glycol mono-2-ethylhexyl ether, propylene glycol monophenyl ether, triethylene glycol monobutyl ether, tripropylene glycol monomethyl ether, and tri(propylene glycol)n-butyl ether are exemplary examples.

Among them, the monohydric solvent is preferably an alcohol-based solvent and more preferably a branched aliphatic monohydric alcohol. Among these, a branched aliphatic monohydric alcohol having 16 to 20 carbon atoms is still more preferable, from the viewpoint of the void suppression ability and the thixotropy of a solder paste.

<<Dihydric solvent>>

As the dihydric solvent, ethylene glycol, diethylene glycol, triethylene glycol, tetraethylene glycol, propylene glycol, dipropylene glycol, tripropylene glycol, tetrapropylene glycol, 1,3-propanediol, 1,2-butanediol, 1,3-butanediol, 1,4-butanediol, 2-methyl-1,3-propanediol, 1,2-pentanediol, 1,3-pentanediol, 1,4-pentanediol, 1,5-pentanediol, and neopentyl glycol; and 2-ethyl-2-hydroxymethyl-1,3-propanediol, 2-ethyl-2-methyl-1,3-propanediol, 2-butyl-2-ethyl-1,3-propanediol, 2-ethyl-2-propyl-1,3-propanediol, 2,2-dimethyl-1,3-propanediol, and 2,5-dimethylhexane-2,5-diol are exemplary examples.

One of the solvent (S2) may be used alone, or two or more thereof may be mixed and used.

The solvent (S2) is at least one selected from the group consisting of a monohydric solvent and a dihydric solvent, and among these, a solvent including a monohydric solvent is preferable.

As the monohydric solvent, an alcohol-based solvent is more preferable, and a branched aliphatic monohydric alcohol having 16 to 20 carbon atoms is still more preferable.

The content of the solvent (2) in the flux according to the present embodiment is 50% by mass or more, may be 70% by mass or more, may be 80% by mass or more, may be 98.5% by mass or less, or may be 95% by mass or less, with respect to the total amount (100% by mass) of the flux.

In the flux according to the present embodiment, the content of the solvent (2) may be a remainder that adjusts the total of all components (including the solvent (2)) blended in the flux to 100% by mass.

In the flux according to the present embodiment, the mixing ratio of the solvent (S2) and the triol solvent (S 1) is preferably 7 to 31, more preferably 7 to 25, and still more preferably 7.5 to 20, as a mass ratio represented by solvent (S2)/triol solvent (S 1).

In the case where the solvent (S2)/triol solvent (S 1) is within the above-described preferred range, the void suppression ability, the thixotropy of a solder paste, and the hot slump suppression capability when made into a solder paste can be improved. In particular, in the case where the mixing ratio is equal to or less than the upper limit value of the above-described preferred range, the generation of voids during soldering can be suppressed.

<Other components>

The flux according to the present embodiment may contain other components as necessary, in addition to the triol solvent, the monoamide-based thixotropic agent, the monohydric solvent, and the dihydric solvent.

As the other components, an activator such as an organic acid, an amine, and a halogen compound; a resin component such as rosin; a thixotropic agent other than the monoamide-based thixotropic agent; a solvent other than the triol solvent, the monohydric solvent, and the dihydric solvent; a surfactant, a metal deactivator, an antioxidant, a silane coupling agent, and a colorant are exemplary examples.

<<Activator>>

The flux according to the present embodiment may contain an activator such as an organic acid, an amine, or a halogen compound.

As the organic acid, a carboxylic acid, an organic sulfonic acid, and the like are exemplary examples.

As the carboxylic acid, for example, an aliphatic carboxylic acid and an aromatic carboxylic acid are exemplary examples.

**EP 4 454 805 A2**

As the aliphatic carboxylic acid, an aliphatic monocarboxylic acid and an aliphatic dicarboxylic acid are exemplary examples. As the aliphatic monocarboxylic acid, for example, caproic acid, enanthic acid, caprylic acid, pelargonic acid, isopelargonic acid, capric acid, caproleic acid, lauric acid (dodecanoic acid), undecanoic acid, linderic acid, tridecanoic acid, myristoleic acid, pentadecanoic acid, isopalmitic acid, palmitoleic acid, hiragonic acid, hydnocarpic acid, margaric acid, isostearic acid, elaidic acid, petroselinic acid, moroctic acid, eleostearic acid, tariric acid, vaccenic acid, ricinoleic acid, vernolic acid, sterculynic acid, nonadecanoic acid, eicosanoic acid, stearic acid, 12-hydroxystearic acid, oleic acid, linoleic acid, linolenic acid, and myristic acid are exemplary examples. As the aliphatic dicarboxylic acid, for example, oxalic acid, malonic acid, succinic acid, glutaric acid, adipic acid, pimelic acid, suberic acid, azelaic acid, sebacic acid, dodecanedioic acid, eicosanedioic acid, tartaric acid, 2,4-diethylglutaric acid, diglycolic acid, 2-methylnonanedioic acid, 4-(methoxycarbonyl)-2,4-dimethylundecanedioic acid, 4,6-bis(methoxycarbonyl)-2,4,6-trimethyltridecanedioic acid, and 8,9-bis(methoxycarbonyl)-8,9-dimethylhexadecanedioic acid are exemplary examples.

As the aromatic carboxylic acid, for example, salicylic acid, dibutylaniline diglycolic acid, terephthalic acid, parahydroxyphenylacetic acid, phenylsuccinic acid, phthalic acid, benzoic acid, 2,3-dihydroxybenzoic acid, 2-quinolinecarboxylic acid, 3-hydroxybenzoic acid, and p-anisic acid are exemplary examples.

In addition, as the carboxylic acid, tris(2-carboxyethyl) isocyanurate and 1,3-cyclohexanedicarboxylic acid; hydroxycarboxylic acids such as 2,2-bis(hydroxymethyl)propionic acid, 2,2-bis(hydroxymethyl)butanoic acid, citric acid, isocitric acid, malic acid, and tartaric acid; dimer acid, trimer acid, hydrogenated dimer acid which is a hydrogenated product obtained by adding hydrogen to dimer acid, and hydrogenated trimer acid which is a hydrogenated product obtained by adding hydrogen to trimer acid; picolinic acid, dipicolinic acid, and 3-hydroxypicolinic acid are also exemplary examples.

As the organic sulfonic acid, an aliphatic sulfonic acid, an aromatic sulfonic acid, and the like are exemplary examples.

As the aliphatic sulfonic acid, for example, an alkanesulfonic acid and an alkanolsulfonic acid are exemplary examples. As the alkanesulfonic acid, for example, methanesulfonic acid, ethanesulfonic acid, 1-propanesulfonic acid, 2-propanesulfonic acid, 1-butanesulfonic acid, 2-butanesulfonic acid, pentanesulfonic acid, hexanesulfonic acid, decanesulfonic acid, and dodecanesulfonic acid are exemplary examples. As the alkanolsulfonic acid, for example, 2-hydroxyethane-1-sulfonic acid, 2-hydroxypropane-1-sulfonic acid, 2-hydroxybutane-1-sulfonic acid, 2-hydroxypentane-1-sulfonic acid, 1-hydroxypropane-2-sulfonic acid, 3-hydroxypropane-1-sulfonic acid, 4-hydroxybutane-1-sulfonic acid, 2-hydroxyhexane-1-sulfonic acid, 2-hydroxydecane-1-sulfonic acid, and 2-hydroxydodecane-1-sulfonic acid are exemplary examples.

As the aromatic sulfonic acid, for example, 1-naphthalenesulfonic acid, 2-naphthalenesulfonic acid, p-toluenesulfonic acid, xylenesulfonic acid, p-phenolsulfonic acid, cresol sulfonic acid, sulfosalicylic acid, nitrobenzenesulfonic acid, sulfobenzoic acid, and diphenylamine-4-sulfonic acid are exemplary examples.

As the amine, for example, azoles, guanidines, amino alcohols, alkylamine compounds, and amine polyoxyalkylene adducts are exemplary examples.

As the halogen compound, for example, amine hydrohalide, halogenated aliphatic alcohol, and a halogenated heterocyclic compound are exemplary examples. The amine hydrohalide is a compound obtained by reacting an amine with a hydrogen halide.

One of the activators may be used alone, or two or more thereof may be mixed and used.

In the case where the flux according to the present embodiment further contains an activator, the content of the activator in the flux is preferably more than 0% by mass and 5% by mass or less with respect to the total amount (100% by mass) of the flux, from the viewpoint of suppressing the generation of voids during soldering.

Alternatively, in the case where a solder paste containing the flux according to the present embodiment is used during soldering by carrying out reflow in a reducing gas atmosphere, the flux may not contain the activator. In particular, the flux according to the present embodiment, which does not contain the activator, is favorably used to conduct soldering by a reflow method in a reducing gas atmosphere of formic acid with a solder paste.

<<Resin component>>

The flux according to the present embodiment may contain a resin component such as a rosin-based resin. However, in the flux according to the present embodiment, since the flux contains a triol solvent and a monoamide-based thixotropic agent, a resin component such as rosin may be used optionally, and from the viewpoint of reducing the amount of flux residues during soldering, it is preferable that the flux do not contain a rosin-based resin.

The term "rosin-based resin" used herein encompasses natural resins containing a mixture of abietic acid and isomers thereof in which the abietic acid is the main component thereof, and resins obtained by chemically modifying natural resins (hereinafter, referred to as "rosin derivatives").

As the rosin derivatives, for example, a purified rosin and a modified rosin are exemplary examples.

As the modified rosin, a hydrogenated rosin, a polymerized rosin, a polymerized hydrogenated rosin, a disproportionated rosin, an acid-modified rosin, a rosin ester, an acid-modified hydrogenated rosin, an acid anhydride-modified hydrogenated rosin, an acid-modified disproportionated rosin, an acid anhydride-modified disproportionated rosin, a phenol-modified rosin, an α,β unsaturated carboxylic acid-modified product (such as an acrylated rosin, a maleated rosin, and a fumarated rosin), purified products, hydrides, and disproportionated products of polymerized rosin, purified products, hydrides, and disproportionated products of an α,β unsaturated carboxylic acid-modified product, a rosin alcohol, a rosin amine, a hydrogenated rosin alcohol, a rosin ester, a hydrogenated rosin ester, a rosin soap, a hydrogenated rosin soap, and an acid-modified rosin soap are exemplary examples.

<<Thixotropic agent other than monoamide-based thixotropic agent>>

The flux according to the present embodiment may contain a thixotropic agent other than the monoamide-based thixotropic agent. As the thixotropic agent other than the monoamide-based thixotropic agent, bisamides, other polyamides, wax-based thixotropic agents, and sorbitol-based thixotropic agents are exemplary examples.

As the bisamide, methylene bisstearamide, ethylene bislauramide, ethylene bishydroxy fatty acid (number of carbon atoms in the fatty acid: C6 to C24) amide, ethylene bisstearamide, ethylene bishydroxystearamide, saturated fatty acid bisamide, methylene bisoleamide, unsaturated fatty acid bisamide, m-xylylene bisstearamide, aromatic bisamide, and the like are exemplary examples.

As the other polyamides, saturated fatty acid polyamide, unsaturated fatty acid polyamide, aromatic polyamide, 1,2,3-propanetricarboxylic acid tris(2-methylcyclohexylamide), cyclic amide oligomer, acyclic amide oligomer, and the like are exemplary examples.

As the wax-based thixotropic agent, an ester compound is an exemplary example, and hardened castor oil is a specific exemplary example.

As the sorbitol-based thixotropic agent, for example, dibenzylidene-D-sorbitol, bis(4-methylbenzylidene)-D-sorbitol, (D-)sorbitol, monobenzylidene(-D-)sorbitol, and mono(4-methylbenzylidene)-(D-)sorbitol, and the like are exemplary examples.

As described above, the flux according to the present embodiment contains the triol solvent (S1), 0.5% by mass or more and less than 15% by mass of the monoamide-based thixotropic agent, and 50% by mass or more of at least one solvent (S2) selected from the group consisting of the monohydric solvent and the dihydric solvent. Solder paste residue can be reduced by including predetermined amounts of the monoamide-based thixotropic agent and the solvent (S2). In addition, the generation of voids during soldering can be further suppressed by further containing the triol solvent (S 1). In particular, in the case where the reflow is carried out in a reducing gas atmosphere, the void area ratio measured in Examples described later can be reduced. In a general reflow method, the void area ratio is high even in the case where the void area ratio is approximately 5%. However, by using the flux according to the present embodiment it is possible to further decrease the generation of voids, thereby bringing the void area ratio closer to zero.

In addition, by using the combination of the first triol solvent selected from the group consisting of 3-methylbutane-1,2,3-triol and 2-methylbutane-1,2,4-triol and the second triol solvent selected from the group consisting of 1,2,6-hexanetriol, glycerin, and 1,2,4-butanetriol as the triol solvent (S 1) in the flux according to the present embodiment, the thixotropy of a solder paste can be enhanced and the hot slump suppression capability when made into a solder paste can be improved. As a result, the amount of thixotropic agent can be reduced, and the generation of voids and solder paste residue can be further decreased.

The above-described flux according to the present embodiment can be favorably used to conduct soldering by a reflow method in a reducing gas atmosphere with a solder paste.

(Solder paste)

The solder paste according to a second aspect contains a solder alloy powder and the above-described flux according to the first aspect.

The solder alloy powder may be constituted of a solder powder consisting of Sn, or a powder of an Sn-Ag-based solder alloy, an Sn-Cu-based solder alloy, an Sn-Ag-Cu-based solder alloy, an Sn-Bi-based solder alloy, an Sn-In-based solder alloy, or the like, or may be a solder alloy powder obtained by adding Sb, Bi, In, Cu, Zn, As, Ag, Cd, Fe, Ni, Co, Au, Ge, P, or the like to these alloys.

The solder alloy powder may be constituted of a powder of an Sn-Pb-based solder alloy or an Sn-Pb-based solder alloy to which Sb, Bi, In, Cu, Zn, As, Ag, Cd, Fe, Ni, Co, Au, Ge, P, or the like is added.

The solder alloy powder is preferably a solder which does not contain Pb.

As the solder alloy powder, for example, a solder alloy powder having a melting temperature of 150°C to 250°C can be used.

Content of flux:

The content of the flux in the solder paste is preferably 5% by mass to 30% by mass and more preferably 5% by mass to 15% by mass with respect to the total mass of the solder paste.

Since the solder paste according to the present embodiment described above contains the flux according to the first aspect, the generation of voids can be further suppressed during soldering.

Alternatively, such a solder paste further decreases the generation of voids to bring the void area ratio closer to zero, enhances the thixotropy when made into a solder paste, and suppresses hot slump.

(Method of producing joined body)

The method of producing a joined body according to a third aspect includes a step of obtaining a joined body by soldering a component and a substrate. In the method of producing a joined body, during soldering, reflow is carried out in a reducing gas atmosphere using the above-described solder paste according to the second aspect.

Hereinafter, an embodiment of the method of producing a joined body according to the third aspect will be described.

The method of producing a joined body according to the present embodiment is a method in which a solder paste application step, a component attachment step, and a reflow step are conducted in this order.

[Solder paste application step]

In the solder paste application step, the solder paste according to the second aspect is applied onto the surface of a substrate.

As the substrate, for example, a printed wiring board, a wafer, and the like are exemplary examples.

As a method of applying the solder paste, for example, a method of printing and applying the solder paste using a mask having an opening, a method of discharging the solder paste using a dispenser or the like, and a method of transferring the solder paste using a probe pin or the like are exemplary examples.

[Component attachment step]

In the component attachment step, a component is attached to the substrate to which the solder paste has been applied.

As the component, for example, a chip, an integrated circuit, a transistor, a diode, a resistor, and a capacitor are exemplary examples.

[Reflow step]

The reflow step includes at least an operation of carrying out reflow in a reducing gas atmosphere, and may include carrying out reflow in a nitrogen gas atmosphere as long as the effects of the present invention are exhibited.

The reducing gas atmosphere may be formed, for example, by volatilizing a reducing compound in a reflow furnace, or by supplying, to a reflow furnace, a reducing gas obtained by aerating a reducing compound in liquid form with nitrogen. As the reducing compound, formic acid is preferable.

In the case where the atmosphere in the reflow step is a reducing gas atmosphere, the solder paste may contain a reduced amount of the activator or may not contain any activators. As a result, it is possible to further reduce the flux residues.

In the reflow step, the substrate after the component attachment step is heated in the reflow furnace at a temperature higher than the melting point of the solder powder contained in the solder paste (namely, at a peak temperature) (this step being referred to as a main heating step). The heating temperature may be, for example, a temperature higher than the melting point of the solder powder by 5°C to 30°C. The heating time may be, for example, one minute to four minutes.

The reflow step may include a pre-heating step before the main heating step.

In the pre-heating step, the substrate after the component attachment step is heated in the reflow furnace at a temperature lower than the melting point of the solder powder contained in the solder paste. The heating temperature may be, for example, 190°C to 220°C. The heating time may be, for example, one minute to five minutes.

In the pre-heating step, the inside of the reflow furnace may be the nitrogen gas atmosphere described above or a reducing gas atmosphere.

Since soldering is conducted by a reflow method in a reducing gas atmosphere with the solder paste containing the above-described flux according to the present embodiment in the method of producing a joined body according to the present embodiment described above, flux residues can be reduced, and the generation of voids can be further suppressed. Accordingly, the fatigue life of the obtained joined body can be extended, and the deterioration of thermal conductivity can be suppressed. In addition, hot slump can also be suppressed, thereby making it possible to reduce the possibility of the substrate short-circuiting.

[Examples]

Hereinafter, the present invention will be described with reference to Examples, but the present invention is not limited to the following Examples.

<Preparation of flux>

(Examples 1 to 21 and Comparative Examples 1 and 2)

Each flux of Examples and Comparative Examples, having compositions shown in Tables 1 to 4, was prepared.
In the tables, the content of each raw material indicates the proportion (% by mass) with respect to the total mass (100% by mass) of the flux.
Raw materials used are described below.

· Triol solvent (S 1)

3-Methylbutane-1,2,3-triol and 2-methylbutane-1,2,4-triol were used as first triol solvents.
1,2,6-Hexanetriol, glycerin, and 1,2,4-butanetriol were used as second triol solvents.

· Monoamide-based thixotropic agent

p-Toluamide and stearamide were used.

· Solvent (S2)

Isooctadecanol (5,7,7-trimethyl-2-(1,3,3-trimethylbutyl)-1-octanol), 2-hexyldecanol, and hexyl diglycol (diethylene glycol monohexyl ether) were used as monohydric solvents.
1,4-Butanediol was used as a dihydric solvent.

· Activator

Capric acid was used.

<Preparation of solder paste>

Each flux and the following solder alloy powder were mixed to prepare a solder paste. In all the prepared solder pastes, the content of the flux was 9% by mass and the content of the solder alloy powder was 91% by mass.
The solder alloy powder was a powder composed of a solder alloy consisting of 7.0% by mass of Sb, 0.6% by mass of Cu, and a remainder of Sn. The solidus temperature of the solder alloy was 235°C, and the liquidus temperature thereof was 242°C. The size of the above-described solder alloy powder (particle size distribution) satisfied symbol 4 in the classification of powder sizes (Table 2) in JIS Z 3284-1:2014.

<Evaluation>

As shown below, void suppression ability, thixotropy of the solder paste, and hot slump suppression capability were evaluated. The evaluation results are shown in Tables 1 to 4.

[Evaluation of void suppression ability]

The solder paste prepared as described above was printed on a Cu plate (50 mm × 50 mm) using a metal mask (thickness of 0.15 mm and opening of 10 mm × 10 mm).
Next, a Cu chip (10 mm × 10 mm) was mounted on the Cu plate on which the solder paste was printed.
Next, reflow was carried out under the following conditions to conduct soldering.

Reflow conditions:

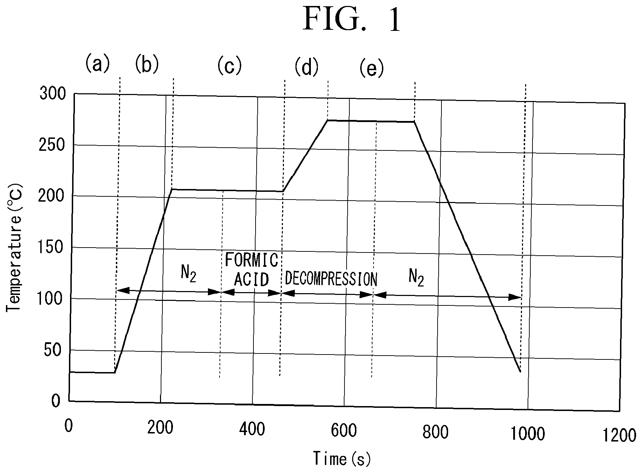

A reflow profile carried out in the evaluation is shown in FIG. 1.

In FIG. 1, reflow conditions at each of elapsed times (a), (b), (c), (d), and (e) are shown below.

(a) Before heating, the inside of the furnace was evacuated, and then nitrogen replacement was carried out.
(b) First temperature increase (from 30°C to 210°C at a temperature increase rate of 1.5°C/sec) was carried out.
(c) Pre-heating (at 210°C for four minutes) was carried out while injecting formic acid.
(d) Second temperature increase (from 210°C to 280°C at a temperature increase rate of 0.7°C/sec) was carried out under vacuum conditions.
(e) The temperature was maintained at 280°C for three minutes, during which the pressure was returned to atmospheric pressure after two minutes, and then maintained for one minute.

Void evaluation method:

The void area was measured by irradiating the joined body of the Cu plate and the Cu chip with X-rays from a vertical direction of the Cu plate, and analyzing the transmitted X-rays.

An XD 7600NT Diamond X-ray system (manufactured by Nordson DAGE) was used to measure the void area.

It was assumed that voids were present when X-rays passed through at least one void to measure the void area. Voids having a diameter of 0.1 $\mu$m or more were detected.

Next, the proportion of the total area of the voids to the total area of a lower surface of the Cu chip (set as an area ratio of 100%) was calculated and defined as the void area ratio (%). The average value of void area ratios in five joined bodies was obtained.

The smaller the void area ratio, the higher the void suppression ability.

[Evaluation of thixotropy of solder paste]

The thixotropy of the solder paste prepared as described above was evaluated by a spiral method in accordance with JIS Z 3284-3:2014 (4.2 "Viscosity characteristic test" 1) using a spiral viscometer. The rotational speed of the viscometer was set at 3 rpm and 30 rpm, and the viscosity of the solder paste after rotation for a predetermined time was used to calculate a thixotropy ratio.

From the following equation, the thixotropy ratio TI was calculated (log is a common logarithm).

$$\text{Thixotropy ratio TI} = \log\left(\eta 1/\eta 2\right)/\log\left(D2/D1\right)$$

$\eta 1$: Viscosity at a shear rate D1
$\eta 2$: Viscosity at a shear rate D2
D1: Shear rate 1, D1 = 1.8 s$^{-1}$ (3 r/min)
D2: Shear rate 2, D2 = 18 s$^{-1}$ (30 r/min)

The higher the thixotropy ratio TI, the higher the thixotropy of the solder paste.

[Evaluation of hot slump suppression capability]

The hot slump of the solder paste prepared as described above was evaluated in accordance with the method described in JIS Z 3284-3:2014 4.4 "Hot slump test".

First, the solder paste was printed using a metal mask in which pattern holes shown in I (hole size of 3.0 × 0.7) in FIG. 6 of 4.3 "Slump test during printing" in JIS Z 3284-3: 2014 were arranged, thereby obtaining a test plate. The obtained test plate was left to stand in a constant-temperature tank at 150°C for three minutes.

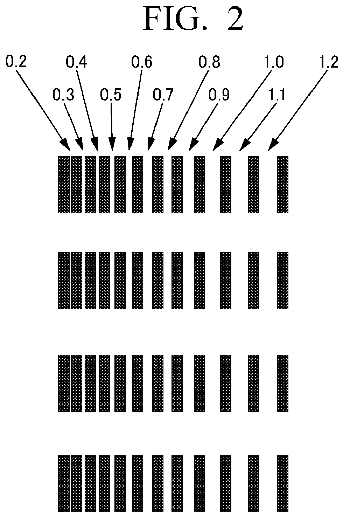

FIG. 2 shows a schematic diagram of the pattern of I. In FIG. 2, numerical values from 0.2 to 1.2 indicate the distance between the pattern holes.

The test plate after heating was evaluated by confirming visually the minimum interval at which all the printed solder pastes were not integrated.

The smaller the minimum interval, the higher the hot slump suppression capability.

[Table 1]

| Flux | | | Content of each raw material (% by mass) | | | | | | |
|---|---|---|---|---|---|---|---|---|---|
| | | | Comparative Example 1 | Comparative Example 2 | Example 1 | Example 2 | Example 3 | Example 4 | Example 5 |
| Triol solvent (S1) | First triol solvent | 3 -Methylbutane-1,2,3-triol | | | 3 | | | | |
| | | 2-Methylbutane-1,2,4-triol | | | | 3 | | | |
| | Second triol solvent | 1,2,6-Hexanetriol | | | | | 3 | | |
| | | Glycerin | | | | | | 3 | |
| | | 1,2,4-Butanetriol | | | | | | | 3 |
| Monoamide-based thixotropic agent | | p-Toluamide | 14 | 3 | 3 | 3 | 3 | 3 | 3 |
| | | Stearamide | 9 | 2 | 2 | 2 | 2 | 2 | 2 |
| Solvent (S2) | Monohydric solvent | Isooctadecanol | 77 | 95 | 92 | 92 | 92 | 92 | 92 |
| Total (% by mass) | | | 100 | 100 | 100 | 100 | 100 | 100 | 100 |
| Solvent (S2)/triol solvent (S1) (mass ratio) | | | - | - | 31 | 31 | 31 | 31 | 31 |
| Evaluation | | Void suppression ability/void area ratio (%) | 7.32 | 6.67 | 1.65 | 2.41 | 2.83 | 2.49 | 2.58 |
| | | Thixotropy of solder paste/ thixotropy ratio TI | 0.25 | 0.10 | 0.10 | 0.55 | 0.65 | 0.60 | 0.60 |
| | | Hot slump suppression capability/minimum interval | 1.0 | 1.0 | 0.7 | 0.7 | 0.3 | 0.3 | 0.3 |

From the results shown in Table 1, it was confirmed that each solder paste containing each flux of Examples 1 to 5 containing the triol solvent exhibited a decreased void area ratio and suppressed the generation of voids during soldering in comparison with each solder paste containing the flux of Comparative Example 1 or 2 in which no triol solvent was contained.

From the comparison between Comparative Example 1 and Comparative Example 2, it was confirmed that even if the content of the monoamide thixotropic agent was reduced, the effect of suppressing the generation of voids was low, the thixotropy of the solder paste was reduced, and the hot slump suppression capability remained low.

[Table 2]

| Flux | | | Content of each raw material (% by mass) | | | | | | |
|---|---|---|---|---|---|---|---|---|---|
| | | | Example 6 | Example 7 | Example 1 | Example 8 | Example 9 | Example 10 | Example 11 |
| Triol solvent (S1) | First triol solvent | 3-Methylbutane-1,2,3-triol | 3 | 3 | 3 | 2 | 10 | 4 | 4 |
| | Second triol solvent | 1,2,6-Hexanetriol | | | | | | | |
| | | Glycerin | | | | 1 | 1 | 1 | 1 |
| | | 1,2,4-Butanetriol | | | | | | | |
| Monoamide-based thixotropic agent | | p-Toluamide | 10 | | 3 | 3 | 3 | 3 | 3 |
| | | Stearamide | | 10 | 2 | 2 | 2 | 2 | 2 |
| Solvent (S2) | Monohydric solvent | Isooctadecanol | 87 | 87 | 92 | 92 | 84 | 90 | 85 |
| Activator | | Capric acid | | | | | | | 5 |
| Total (% by mass) | | | 100 | 100 | 100 | 100 | 100 | 100 | 100 |
| First triol solvent/second triol solvent (mass ratio) | | | - | - | - | 2 | 10 | 4 | 4 |
| Solvent (S2)/triol solvent (S1) (mass ratio) | | | 29 | 29 | 31 | 31 | 8 | 18 | 17 |
| Evaluation | | Void suppression ability/void area ratio (%) | 1.63 | 1.88 | 1.65 | 1.92 | 1.34 | 1.73 | 1.57 |
| | | Thixotropy of solder paste/thixotropy ratio TI | 0.20 | 0.20 | 0.10 | 0.45 | 0.45 | 0.45 | 0.45 |
| | | Hot slump suppression capability/minimum interval | 1.2 | 1.2 | 0.7 | 0.4 | 0.4 | 0.4 | 0.4 |

From the results shown in Table 2, it was confirmed that, in the case where the fluxes of Examples 8 to 11, in which the first triol and the second triol were used in combination, were used, a favorable void suppression ability was exhibited, and the thixotropy of the solder paste and the hot slump suppression capability were also improved.

[Table 3]

| Flux | | | Content of each raw material (% by mass) | | | | |
|---|---|---|---|---|---|---|---|
| | | | Example 12 | Example 10 | Example 13 | Example 14 | Example 15 |
| Triol solvent (S1) | First triol solvent | 3-Methylbutane-1,2,3-triol | | 4 | 4 | 4 | |
| | Second triol solvent | 1,2,6-Hexanetriol | | | | 1 | |
| | | Glycerin | 5 | 1 | | | 1 |
| | | 1,2,4-Butanetriol | | | 1 | | |
| Monoamide-based thixotropic agent | | p-Toluamide | 3 | 3 | 3 | 3 | 3 |
| | | Stearamide | 2 | 2 | 2 | 2 | 2 |
| Solvent (S2) | Monohydric solvent | Isooctadecanol | 90 | 90 | 90 | 90 | 94 |
| Total (% by mass) | | | 100 | 100 | 100 | 100 | 100 |
| First triol solvent/second triol solvent (mass ratio) | | | 0 | 4 | 4 | 4 | 0 |
| Solvent (S2)/triol solvent (S1) (mass ratio) | | | 18 | 18 | 18 | 18 | 94 |
| Evaluation | | Void suppression ability/ void area ratio (%) | 2.49 | 1.73 | 1.86 | 2.71 | 3.48 |
| | | Thixotropy of solder paste/thixotropy ratio TI | 0.60 | 0.45 | 0.45 | 0.45 | 0.45 |
| | | Hot slump suppression capability/minimum interval | 0.3 | 0.4 | 0.4 | 0.4 | 0.4 |

Selection of triol solvent (S 1):

From the results shown in Table 3, it was confirmed that solder pastes containing the fluxes of Examples 10 and 13 decreased the void area ratio, and suppressed the generation of voids during soldering in comparison with the solder pastes containing the fluxes of Examples 12, 14, and 15.

[Table 4]

| Flux | | | Content of each raw material (% by mass) | | | | | |
|---|---|---|---|---|---|---|---|---|
| | | | Example 16 | Example 17 | Example 18 | Example 19 | Example 20 | Example 21 |
| Triol solvent (S1) | First triol solvent | 3-Methylbutane-1,2,3-triol | 3 | 3 | 3 | 3 | 3 | 3 |
| | Second triol solvent | 1,2,6-Hexanetriol | | | | | | |
| | | Glycerin | | 1 | | 1 | | 1 |
| | | 1,2,4-Butanetriol | | | | | | |
| Monoamide-based thixotropic agent | | p-Toluamide | 3 | 3 | 3 | 3 | 3 | 3 |
| | | Stearamide | 2 | 2 | 2 | 2 | 2 | 2 |
| Solvent (S2) | Monohydric solvent | Isooctadecanol | | | | | | |
| | | 2-Hexyldecanol | | | 92 | 91 | | |
| | | Hexyl diglycol | | | | | 92 | 91 |
| | Dihydric solvent | 1,4-Butanediol | 92 | 91 | | | | |
| Total (% by mass) | | | 100 | 100 | 100 | 100 | 100 | 100 |
| First triol solvent/second triol solvent (mass ratio) | | | - | 3 | - | 3 | - | 3 |
| Solvent (S2)/triol solvent (S1) (mass ratio) | | | 31 | 23 | 31 | 23 | 31 | 23 |
| Evaluation | | Void suppression ability/void area ratio (%) | 1.82 | 1.80 | 1.67 | 1.60 | 1.80 | 1.80 |
| | | Thixotropy of solder paste/thixotropy ratio TI | 0.20 | 0.20 | 0.20 | 0.45 | 0.20 | 0.40 |
| | | Hot slump suppression capability/ minimum interval | 1.2 | 1.2 | 1.2 | 0.4 | 1.2 | 0.4 |

EP 4 454 805 A2

16

Combination of triol solvent (S 1) and solvent (S2):

It was confirmed from the results shown in Table 4 that a favorable void suppression ability was exhibited, and the thixotropy of the solder paste and the hot slump suppression capability were also improved in the case of using the fluxes of Example 19 and Example 21, in which the first triol and the second triol were used in combination among Examples 18 to 21 in which a monohydric solvent was contained.

Comparing Example 16 and Example 17, in which a dihydric solvent was contained, the thixotropy of the solder paste and the hot slump suppression capability were not improved even when using a first triol and a second triol in combination.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1.  A flux comprising:

    a triol solvent (S1);
    a monoamide-based thixotropic agent; and
    at least one solvent (S2) selected from the group consisting of a monohydric solvent and a dihydric solvent,
    wherein a content of the monoamide-based thixotropic agent is 0.5% by mass or more and less than 15% by mass with respect to a total mass of the flux, and
    a content of the solvent (S2) is 50% by mass or more with respect to the total mass of the flux.

2.  The flux according to Claim 1,
    wherein a content of the triol solvent (S1) is 1% by mass or more and 15% by mass or less with respect to the total mass of the flux.

3.  The flux according to Claim 1 or 2,
    wherein the triol solvent (S1) is a triol compound in which three hydroxy groups are bonded to a chained hydrocarbon group having three to six carbon atoms.

4.  The flux according to Claim 3,
    wherein the triol solvent (S1) is at least one selected from the group consisting of 3-methylbutane-1,2,3-triol, 2-methylbutane-1,2,4-triol, 1,2,6-hexanetriol, glycerin, and 1,2,4-butanetriol.

5.  The flux according to Claim 4,
    wherein the triol solvent (S1) is a combination of a first triol solvent selected from the group consisting of 3-methylbutane-1,2,3-triol and 2-methylbutane-1,2,4-triol and a second triol solvent selected from the group consisting of 1,2,6-hexanetriol, glycerin, and 1,2,4-butanetriol.

6.  The flux according to Claim 5,
    wherein a mixing ratio of the first triol solvent and the second triol solvent is 1 to 10 as a mass ratio represented by the first triol solvent/the second triol solvent.

7.  The flux according to any one of Claims 1 to 6,
    wherein the solvent (S2) comprises the monohydric solvent.

8.  The flux according to Claim 7,
    wherein the monohydric solvent is a branched aliphatic monohydric alcohol having 16 to 20 carbon atoms.

9.  The flux according to any one of Claims 1 to 8,
    wherein a mixing ratio of the solvent (S2) and the triol solvent (S 1) is 7 to 31 as a mass ratio represented by the solvent (S2)/the triol solvent (S1).

10. The flux according to any one of Claims 1 to 9,
wherein the monoamide-based thixotropic agent is a combination of an aromatic amide and a fatty acid amide.

11. The flux according to any one of Claims 1 to 10, further comprising:

an activator,
wherein a content of the activator is more than 0% by mass and 5% by mass or less with respect to the total mass of the flux.

12. The flux according to any one of Claims 1 to 11,
wherein the flux contains no rosin-based resin.

13. The flux according to any one of Claims 1 to 10,
wherein the flux contains no activator.

14. A solder paste comprising:

a solder alloy powder; and
a flux of any one of Claims 1 to 13.

15. A method of producing a joined body, the method comprising:

a step of obtaining a joined body by soldering a component and a substrate,
wherein, during soldering, reflow is carried out in a reducing gas atmosphere using a solder paste of Claim 14.

# FIG. 1

# FIG. 2

0.2    0.4    0.6    0.8    1.0    1.2
  0.3    0.5    0.7    0.9    1.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6706000 B